# EUROPEAN PATENT APPLICATION

(11) **EP 2 546 792 A1**
(43) Date of publication of application: **16.01.2013**
(21) Application number: 12169705.6
(22) Date of filing: 29.05.2012
(51) Int. Cl.: G06Q 20/00, G06Q 10/00

(54) **A means for confirming timing information relating to transactions through the optical scanning of variable patterns displayed on a graphical display device**

(30) Priority: 13.07.2011 GB 201112002
(71) Applicant: Jenton International Limited, Evingar Road Whitchurch Hampshire RG28 7BB (GB)
(72) Inventor: Little, Richard, Whitchurch, Hampshire RG28 7BB (GB); Atkinson, John, Whitchurch, Hampshire RG28 7BB (GB); Sion, Russell, Whitchurch, Hampshire RG28 7BB (GB); Smith, Toby, Whitchurch, Hampshire RG28 7BB (GB)
(74) Representative: Mackenzie, Andrew Bryan

(57) **Abstract**

The invention describes a means for facilitating transactions by confirming the timing of a transaction via the expedient of optically scanning a display that displays pattern encoded timing information in such a way that it can be scanned optically by for example a personal portable device such as a mobile phone equipped with a camera input device and wherein said information can be utilized for the purposes of confirming the timing of a transaction by dint of the fact that the displayed time was "captured" at the instant of the transaction being made and at the location of the display but wherein the actual process of affecting the transaction may be delayed to a later point in time and possibly at another location.

## Description

### Technical Field

A means has been invented for graphically presenting variable information in such a way that it can be scanned optically and used for various purposes such as the performing of a transaction (Patent application GB1108595.8). The invention described here constitutes a means for facilitating such transactions by confirming the timing of a transaction via the expedient of optically scanning a display that displays timing information encoded as a pattern in such a way that it can be scanned optically by for example a personal portable device such as a mobile phone equipped with a camera input device and wherein said information can be utilized for the purposes of confirming the timing of a transaction by dint of the fact that the displayed time was "captured" at the instant of the transaction being made and at the location of the display but wherein the actual process of affecting the transaction may be delayed to a later point in time and possibly at another location.

### Background

There are situations where there are significant benefits if optically scannable displayed information can easily be modified to reflect changes in the information as appertaining to the point in time at which the information is scanned. These changes in the information may reflect changes due to the actual point in time at which the information is accessed, such as a change in a charging tariff or the price of an item or service that is being purchased for example. In these situations it can be desirable to ascertain the point in time at which the information was scanned during the process of scanning. In this way it is possible to verify or confirm the time at which a transaction is initiated by the act of scanning timing information that is encoded in the graphically displayed information that is being scanned.

In the invention described here, this may be achieved through the use of a changeable display such as a liquid crystal display (LCD) for example, whereby the pattern on the display may be modified to present different information at different times and/or locations. In this way a display can be made to display information relevant to a location or a time or a situation simply by altering the pattern displayed. It is thus also possible to display timing information that can be interpreted by the scanning device and utilized for purposes such as the confirmation of the time of a transaction.

An example is where a two-dimensional barcode can be presented on a variable display such that it displays different information at different times. The display does not have to be limited to a 2-dimensional barcode however and other graphical patterns may be used including multi-dimensional and multi-directional barcodes. A major advantage of this method of displaying and transferring data is that different coded and if desirable encrypted patterns may be generated by the same display to communicate different or changing information at different times and such that scanning the information using a portable device such as a mobile phone with an optical scanning capability such as a camera input can decode and interpret this encoded or encrypted information to enable a transaction to be effected for example.

The invention described here has the further advantage in that the portable device used to scan or collect information may be any pre-existing device with an optical scanning capability, for example a mobile phone or handheld computer such as an "iPad" having either a built-in or connected camera or barcode reader or other form of optical scanning input capability. This use of pre-existing devices for the scanning of the information simplifies implementation and may also confer cost benefits due to the wide availability of such devices, however the invention is not limited solely to the use of pre-existing devices and there are instances where a device purposely designed for carrying out the scanning of the pattern encoded information may be preferable.

In the present invention described here a variable graphical display is utilized for displaying graphically encoded timing information such as the date and time for example. This timing information can then be determined and recorded by a scanning device at the time the graphical display is scanned through the storage of the graphical image for example. In this way it is possible to establish that the information was scanned at a particular location at a particular time and this information can be "remembered" by the scanning device such that a transaction can be conducted at a later point in time and possibly at a different location but be based on the precise time and location where and when the scanning of the displayed information took place.

Examples of where the invention may find application include, but are not limited to, its use in a car parking facility described as follows. The present situation with transactions involving the purchase of time at a parking facility include but are not exclusive to a variety of problems including the fact that parking meters can be out of action, parking meters can be expensive and vulnerable to theft and/or breakdown, and cash is not a convenient payment means, particularly with the sums often required for the purchase of parking time. Current methods of payment by mobile phone are generally complicated and rely on the availability of a good signal at the point of paying. All current methods of payment can also be time consuming and hence inconvenient when users are in a hurry. Many current methods also involve the displaying of a ticket.

The present invention however avoids many of these problems by, for example, allowing a driver to pre-register vehicle numbers and credit card details on preferably a website, although other means are possible, and after parking a vehicle, scan a display such as an LCD displaying a barcode or other suitable pattern encoded form, containing information that includes a series of questions to be displayed on the scanning device, for example which pre-registered vehicle registration is being parked and for how long. For convenience this information may be presented in list, tabular or other menu style format with the user being invited to select from the list. The displayed barcode or pattern can also be updated at regular intervals with details of the time and date such that the time of parking can be confirmed and a communication can be sent from the scanning device to effect the transaction of paying for the parking time for the particular vehicle. It may be that the communication of the transaction information is not possible at the time of scanning of the display, due to a lack of mobile phone (e.g. cellphone) coverage for example, in which case the scanning device may retain the scanned information and utilize it when next the phone re-establishes communications with its network. This may occur at some later point when for example network coverage is regained if there was no coverage at the point of scanning of the barcode. This could then happen at a later time or at another location when the phone comes within range of a network transmitter/receiver for example.

The invention can also be used in a situation where an extension of parking time is required for example, where this can also be achieved by the scanning of a display in a similar manner to that described above.

It is also possible for the displayed barcode to be non-variable such as a printed barcode for example, wherein the timing information is obtained from another source and wherein as long as the transaction details are received within a certain time interval the transaction will be deemed to have been valid. This may occur at some later point where for example network coverage is obtained if there was no coverage at the point of scanning of the barcode.

The ability of the invention to change the information displayed can be beneficial in situations where some form of payment or similar transaction is required. Examples include where a display is required to show pricing information that is variable from time to time. For example the display on a vending machine may be scanned using a mobile phone camera to communicate the price of an item with different selected items showing different encoded prices on the display. Advantages of this approach include the ability to alter the prices easily from a remote location over a communication medium such as the internet or a mobile phone network for example and also for a user to make payment for the item in the same way, for example over a mobile phone network. A further desirable aspect of the invention is that it is possible to send a return authorization code to the scanning device, for example a mobile phone. This information may take the form of an unlocking code that allows the user to access the service or item that is being purchased for example. It is possible that this code could also be automated in the manner of it being received as a graphically encoded pattern, such as a barcode for example, that can then be displayed by the receiving device (mobile phone for example) and scanned by a further device local to the point of purchase for confirmation purposes.

A further example of how the present invention may be used in the above context is as follows. A user wishing to purchase an item, for example from a vending machine, or utilize a facility such as a hotel room or a secure locker, scans a barcode on a variable display such as an LCD for example. The information scanned can then be presented to the user for example in the form of questions that establish the service or item that is being purchased. It can be a further advantage if the timing of the transaction is also established by the act of scanning the LCD wherein the LCD presents the time information in graphically coded form. An authorization code can then be returned to the user via the scanning device or mobile phone for example that allows the item to be released from the vending machine. It is also possible that the vending machine itself may be portable and an aspect of the displayed information may be the location of the transaction as established at the time of scanning of the display.

It may also be desirable that the invention is used in conjunction with a closed circuit television (CCTV) system for the purpose of verification and security by for example enabling a point in time to be verified and thereby facilitating the identification of a particular point in time that an event took place on a CCTV recording.

A further example of the usefulness of the invention is where it could be used to ascertain the time at which persons such as employees for example, enter or leave a location. This is analogous to the familiar clocking-in and clocking-out of a place of work whereby a personal portable device such as a mobile phone is used to scan a display that then registers the time that the scanning took place. In this example and indeed in many of those previously mentioned, the time information that is displayed on the variable display is in an encrypted form such that it is not possible for the user to interpret the information and only the software resident in the personal portable device can determine the displayed time that is registered at the point of scanning. This is a desirable feature of many applications in that it confers a degree of security and makes it difficult for the transaction or the registration of the time of scanning to be tampered with or altered in a fraudulent manner for example.

The security aspects of the invention can be further enhanced by the use of an "electronic receipt" whereby an authorisation code is transmitted to the scanning device such as a mobile phone (cellphone) for example. It is may also be desirable for additional information to be contained in the authorisation code. This additional information may for example take the form of a list of goods or services that are being purchased and may also include identification details such as a photograph of the owner of the portable device that can then be used for verification purposes. This additional information can optionally be displayed in human readable form on the display of the portable device or on some other display device local to the point of the transaction such as a computer screen or on a till display for example in a manner that is analogous to an electronic receipt for goods or services for example. The authorisation code may be transmitted to the portable device from a remote location such as over a mobile phone network or communicated locally by presenting the information in a graphically coded form on a variable graphical display device such as an LCD for example.

### Summary of the Invention

According to a first aspect of the invention, there is provided a means comprising a display unit that is capable of displaying information in graphical form that can be locally accessed by optically scanning the display and wherein timing information in graphically coded and possibly encrypted form is displayed, such that the point in time at which the scanning of the information takes place can be confirmed by the act of scanning the display.

The displayed information may take the form of a two-dimensional barcode or other suitable pattern or non-character based encoding technique including multi-dimensional or multi-directional barcodes. The display unit can take many forms but a preferred embodiment is a liquid crystal display that is capable of displaying graphics such that, for example, a two-dimensional barcode can be displayed with sufficient resolution that it may be scanned easily by a portable device such as a mobile SMART phone such as an "Apple i-Phone" or handheld computer for example. The scanning may typically be achieved through the use of a camera or other optical input device such as a laser diode/sensor combination including those that use either visible or invisible (e.g. infrared) light or any other optical scanning device.

A further aspect of the invention is that the displayed information including the time at which it was scanned may be retained by the scanning device for later use in affecting a transaction. Particularly in this instance, but indeed in any other instance of the invention's use, the location at which the scanning took place may also be retained in a coded form for later verification purposes.

A further aspect of the invention is that if desired it is possible to return an acknowledgement of the act of scanning that can take many forms including a receipt for purchase of goods or services and that may contain other information such as photographic images or other means for confirming identity.

### Brief Description of the Drawings

The invention will now be described by way of example, with reference to the drawings, which illustrate one particular embodiment of the invention in which:

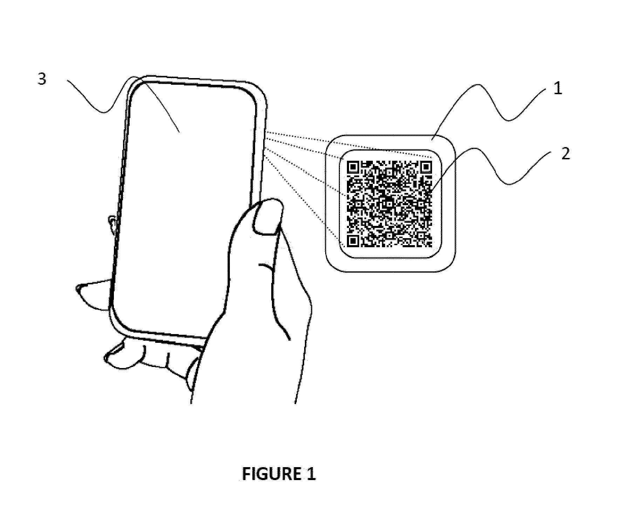

Figure 1 is a diagram of an apparatus in accordance with the invention being used to present variable information that may include timing details such as the current date and time for example in the form of a two-dimensional barcode displayed on a liquid crystal display that can be optically scanned by a portable device;

### Detailed description of a preferred embodiment

With reference to the drawings, Figure 1 shows one embodiment of the invention consisting of a display device *1* that presents variable information that may include timing details such as the current date and time for example in the form of a two-dimensional barcode 2 and a mobile phone 3 on which software may be run so as to perform the function of the optical scanning of the pattern encoded information displayed by the display device by interpretation of the image captured by a camera integral to the mobile phone. Obviously other portable devices may also be used in place of a mobile phone such as handheld computers, data entry devices and etc. The two-dimensional barcode 2 includes encoded timing information such as the current date and time and location for example and may optionally be retained by the scanning device for future processing or verification purposes.

## Claims

1. A means for facilitating transactions by confirming the timing and location of a transaction via the expedient of optically scanning a display that displays graphically encoded timing and location information in such a way that it can be scanned optically and then utilized for the purpose of confirming the timing and location of a transaction so that confirmation of the timing and location of the transaction may take place at any later time and location due to the fact that the time and location of the transaction was established by the act of scanning the timing information that was displayed at the time the scanning took place and wherein the location of the scanning is established by the act of scanning a displayed encoded representation of the location of the display.

2. A means for facilitating transactions as described in claim 1 wherein the scanning device is for example a personal portable device equipped with an optical scanning device or a mobile phone equipped with a camera input device.

3. A means for facilitating transactions as described in claim 1 wherein the transaction is delayed for a period of time until the scanning device is able to establish communications that enable it to effect the transaction required.

4. A means for facilitating transactions as described in claim 1 wherein the graphically encoded information is displayed in an encrypted form.

5. A means for facilitating transactions as described in claim 1 wherein the graphically encoded information is displayed in the form of a 2-dimensional barcode.

6. A means for facilitating transactions as described in claim 1 wherein the graphically encoded information is displayed in the form of a multi-dimensional or multi-directional barcode.

7. A means for facilitating transactions as described in claim 1 wherein the transaction involves payment for goods or services provided local to the point of scanning.

8. A means for facilitating transactions as described in claim 1 wherein the graphically encoded information is displayed on a display that is integral to a sales till or other point of sale terminal such that details of the transaction may be obtained by scanning of the displayed graphically encoded information.

9. A means for facilitating transactions as described in claim 1 wherein the transaction involves the payment of vehicle parking charges.

10. A means for facilitating transactions as described in claim 1 wherein the transaction is validated by the return of an authorization code that may be used to enable the access to or receipt of goods or a service or access to a location.

11. A means for facilitating transactions as described in claim 1 wherein the transaction is validated by the return of an authorization code that may be used to enable access to a hotel room or the content of a vending machine or a garage or other parking facility.

12. A means for facilitating transactions as described in claim 1 wherein the transaction is validated by the return of an authorization code that may contain personal identification information.

13. A means for facilitating transactions as described in claim 1 wherein the transaction is validated by the return of an authorization code that may contain a displayable photograph of the user.

14. A means for facilitating transactions as described in claim 1 wherein the displayed encoded representation of the location of the display is an identifying code that may be used for the purpose of locating the position of a re-locatable display.

15. A means for facilitating transactions as described in claim 1 wherein the transaction is validated by the return of an authorization code that may contain variable information or a record of one or more purchased items or services.
